# EUROPEAN PATENT APPLICATION

(11) **EP 3 038 108 A1**
(43) Date of publication of application: **29.06.2016**
(21) Application number: 14307137.1
(22) Date of filing: 22.12.2014
(51) Int. Cl.: G11B 27/031, G11B 27/28

(54) **Method and system for generating a video album**

(71) Applicant: Thomson Licensing, 92130 Issy-les-Moulineaux (FR)
(72) Inventor: Allie, Valérie, 35576 Cesson-Sévigné (FR); Oisel, Lionel, 35576 Cesson-Sévigné (FR); Rigaut, Steed, 92443 Issy-Les-Moulineaux (FR)
(74) Representative: Huchet, Anne

(57) **Abstract**

The invention relates to the field of the automatic generation of video albums on persons, animals, objects or activities over a given time period. The video album is generated from a plurality of video contents that can be uploaded by a user. The generation of the video album comprises the steps of:
- selecting (S2) a target focus for said video album, said target focus being likely to change over a time period;
- detecting (S3), in the plurality of video contents, video segments comprising said target focus;
- selecting (S4), among the detected video segments, video segments according to at least one selection criterion;
- generating (S5) said video album by aggregating said selected video segments in a chronological order.

## Description

### 1. Technical Field

The present invention relates generally to the field of the automatic generation of video albums on persons, animals, objects or activities over a given time period.

### 2. Background Art

More and more users ask for automatic tools or services for creating video albums on persons, animals, objects or activities. Such a tool or service can be used for creating a biopic of a person or a group of persons (e.g. a family) or a biopic of an animal. It can also be used for creating a video album on a place or an activity (e.g. a sport or a travel).

Currently there is no solution for creating such a video album on a target focus that is likely to change over a given time period.

Therefore there is a need for automatically generating such a video album from a plurality of video contents.

### 3. Summary

The present invention proposes a method for generating a video album from a plurality of video contents, said method comprising the steps of:
- selecting a target focus for said video album, said target focus being likely to change over a time period;
- detecting, in the plurality of video contents, video segments comprising said target focus;
- selecting, among the detected video segments, video segments according to at least one selection criterion; and
- generating said video album by aggregating said selected video segments in a chronological order.

The target focus may be one or more person(s), one or more animal(s), one or more place(s) one ore more object(s), this focus being likely to change over a given time period. The video album aggregates video segments on this target focus in a chronological order.

According to a particular embodiment, before selecting the target focus, the method further comprises a step of selecting a topic among a plurality of predetermined topics for the video album, an album template being associated to each topic. In this embodiment, the selected video segments are aggregated in said video album according to the album template associated to the selected topic.

According to a particular embodiment, the target focus is selected by:
- selecting video content frames related to the selected topic;
- displaying the selected frames; and
- selecting the target focus by marking an area in at least one of said displayed frames, the marked area including the target focus.

In this embodiment, this selection is performed via a dedicated user interface displaying frames related to the selected topic and prompting the user to mark a target focus on the displayed frames.

According to a particular embodiment, the target focus is selected by marking an area in at least two displayed images. It allows having different views of the target focus and increasing the efficiency of the detection of video segments comprising said target focus.

According to a particular embodiment, the images displayed for the target focus selection have capturing dates spread over said time period, and said at least two displayed images and the target focus is selected by marking an area in at least two displayed images having distinct capturing dates. It helps taking into account the change of the target focus over a given time period. For example, if the time period is a 25 years period and if the target focus is a person, selecting the target focus in at least a first image at the beginning of the time period and a second image at the end of this period will enable to take into account the physical changes of the person over this period for the process of generation of the video album.

According to a particular embodiment, metadata are associated to at least one video content of said plurality of video contents. These metadata are advantageously used for detecting the video segments comprising the target focus and/or for selecting frames related to the selected topic.

According to a particular embodiment, the selection criterion for selecting video segments, among the detected video segments including the target focus, belongs to the following criteria:
- a quality criterion representative of the visual quality of the video segment;
- a similarity criterion representative of the similarity level between the content of the video segment and the target focus;
- a visibility criterion representative of the size of the target focus in the video segment.

The invention concerns also a system for generating a video album from a plurality of video contents characterized in that it is configured for:
- selecting a target focus for said video album, said target focus being likely to change over a time period;
- detecting, in the plurality of video contents, video segments comprising said target focus;
- selecting, among the detected video segments, video segments according to at least one selection criterion;
- generating said video album by aggregating said selected video segments in a chronological order.

While not explicitly described, the present embodiments may be employed in any combination or sub-combination.

### 4. Brief description of the drawings

The invention can be better understood with reference to the following description and drawings, given by way of example and not limiting the scope of protection, and in which:
- Figure 1 is a flow chart of the successive steps of a method according to an embodiment of the invention;
- Figure 2 is a first frame example for illustrating the step of selection of a target focus for the video album to be generated;
- Figure 3 is a second frame example for illustrating the step of selection of a target focus for the video album to be generated; and
- Figure 4 is a schematic view of the global architecture of a video album generating system according to one embodiment.

### 5. Description of embodiments

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising," "includes" and/ or "including", when used herein, specify the presence of stated features, integers, steps, operations, elements and /or components, but do not preclude the presence or addition of one or more other features, integers, steps, operations, elements, components and /or groups thereof. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

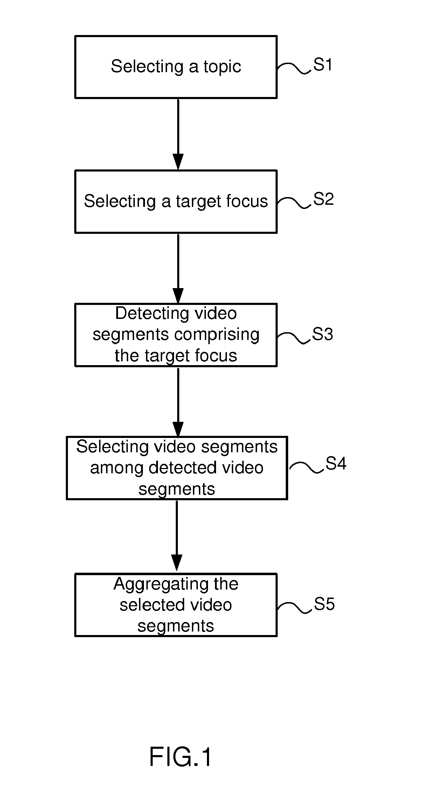

**Figure 1** is a flow chart of the steps of the inventive method. The method is used for generating a video album from a collection of video contents. This collection is provided by the user. For example, the user uploads videos relating to a series of events in a system implementing the inventive method.

Advantageously, some metadata are associated to the uploaded videos in order to have information on the content of these videos. These metadata can be a summary describing the type of event included in the video (wedding, travel, birthday), the place where the video is captured and the names of the persons appearing in the video. These metadata are provided by the user at the time of the video uploading. In the present description, the capturing date of the video is not considered as metadata since such a date is intrinsically linked to the video files.

In a first step S1, a topic is selected for the video album. This topic is selected among a plurality of predetermined topics. This topic is associated to one person, one animal, one place, one object or to a plurality of such elements. The topic is for example one of the following ones: Biopic, Family biopic, Friends, Travel, Location, and Sport.

An album template is associated to each of these topics. In the case of a biopic, the template is focused on a person or an animal. In the case of a family biopic, the template is focused on family members. In the case of friends, the template is focused on one or more friends. In the case of a travel, the template is focused on one or more person(s) and/or one or more place(s). In the case of a location, the template is focused on one or more places(s). In the case of a sport, the template is focused on one team or one person and/or one object.

The template defines the editing/aggregating rules of the video segments that will compose the video album. It can also define the music and/or the audio accompanying the video segments in the video album, or the ratio of close-ups and wide shots in the final video album or their orderings (e.g. alternation of close-ups and wide shots).

In this first step S1, the user may select the topic of his video album through a dedicated user interface displayed on a screen. This interface displays all the predetermined topics and the user selects one of these topics.

In a second step, S2, the user selects a target focus for the video album. The target focus may be one or more person(s), one or more animal(s), one or more place(s) one ore more object(s) and is likely to change over a given time period.

This selection can be performed by displaying frames showing candidate target focuses to the user in a dedicated user interface and allowing the user to select one of them. The displayed candidate target focuses are selected as a function of the selected topic. If the topic is a biopic, frames showing persons will be displayed. If the topic is a location, frames showing places will be displayed. Such frames can be detected by applying face/object recognition algorithms to the video contents. If metadata are associated to the video contents, these metadata can also be used for selecting frames showing the candidate target focuses. For example, if a summary or a title is associated to a video content, this element can be used for this selection.

Once the frames showing candidate target focuses are displayed, the user may select the target focus by marking the area of the displayed frame including the target focus.

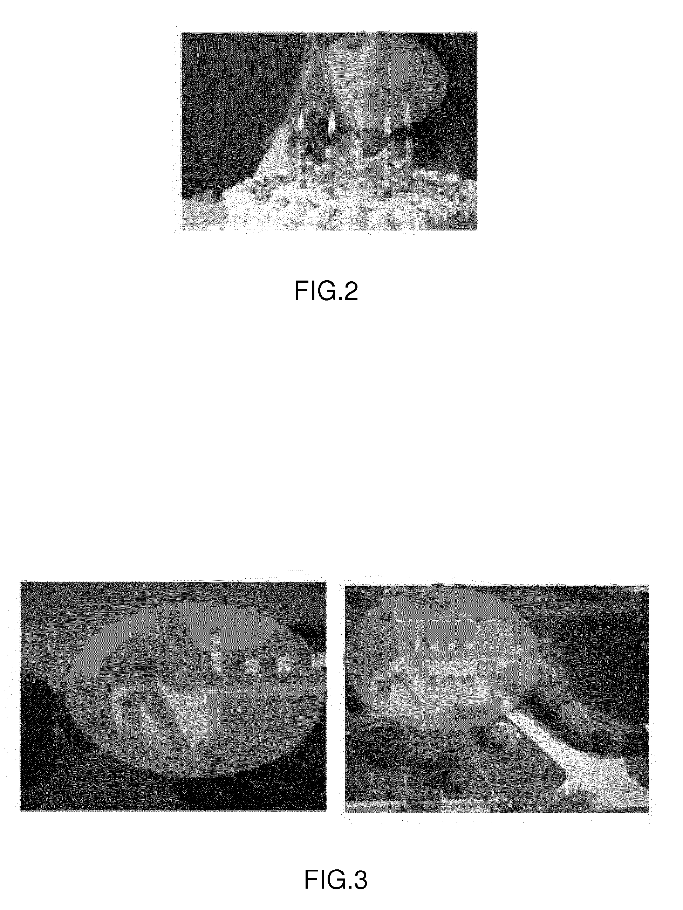

Figs. 2 and 3 illustrate this step. Fig. 2 illustrates the displaying of candidates frames showing persons. In these drawing, the target focus is the person whose face is surrounded by a circle in dotted line. The selection may be made by clicking the surrounded area predefined by the system or by creating this surrounded by appropriate means.

Fig.3 illustrates the displaying of candidates frames showing a house as target focus. Advantageously, the user interface is arranged to select the target focus in at least two frames. In the example of Figure 3, the user can select a side view and a top view of the house as target focus. The use of a plurality of views increases the efficiency of the detection of video segments comprising this target focus.

In case of a person, the selection of a plurality of frames for this target focus helps taking into account the ageing of the person or its change of look (haircut...).

So the target focus is advantageously selected in at least two frames (or images) having capturing dates spread over a given time period, for example over all the life time of the target focus. For example, if the target focus is a 25-year-old person, the user interface will display frames having capturing dates spread over an extended time period such that the user can select frames having different capturing dates, for example a frame of the person's birth and other frames (for example birthday frames) later.

In the following step S3, the video contents are automatically analyzed in order to detect video segments comprising the target focus selected at step S3. This automatic detection is based on known techniques, like face/object recognition techniques, similarities computing techniques, face/object clustering techniques integrating proximate similarities and eventually aging techniques. Some of theses techniques are described in the articles *"*A rank-order distance based clustering algorithm for face tagging" by Zhu, Chunhui, Fang Wen, and Jian Sun, in IEEE Conference on Computer Vision and Pattern Recognition (CVPR), 2011 and *"*Show and Tell: A Neural Image Caption Generator" by Vinyals, Oriol; Toshev, Alexander; Bengio, Samy; Erhan, Dumitru, in Computer Science - Computer Vision and Pattern Recognition, 2014. The metadata associated to the video contents can also be used for detecting the video segments showing the selected target focus.

Once video segments showing the target focus are detected, some of them are selected according to selection criteria in a step S4. The selection criteria are various. The criteria to be applied may be defined in the template associated to the topic selected at step S1. The template can for example define the number of the video segments to be selected and/or the minimal duration of the video segments to be selected and/or the total duration of the final video album and/or the ratio of close-ups and wide shots to be selected and their ordering in the final video summary. These parameters can thus limit the selectable video segments.

The video segments can also be selected according to a similarity level. In a particular embodiment, one similarity level is for example computed for each video segment detected at step S3. This similarity level is delivered by the similarities computing algorithm used for detecting the video segments including the target focus (step S3). The video segments having the highest similarity levels are selected in the step S4.

In an improved embodiment, a similarity threshold is also predefined and the similarity level of each video segment detected at step S3 is compared with this threshold. The video segments selected at step S4 should have a similarity level greater than the predefined threshold. If the number of video segments is not sufficient for generating the video album, the user interface may be arranged to display the video segments whose similarity level is slightly lower than the predefined similarity threshold and to ask an approval to the user before selecting these video segments.

In the same manner, other selection criteria can be used for selecting the video segments to be included in the video album. For example, one quality level representative of the visual quality of the video segment and/or one visibility level representative of the size of the target focus in the video segment is (are) computed for each video segment detected at step S3. The visibility level may be computed as disclosed in *"*A coherent computational approach to model the bottom-up visual attention", by O. Le Meur, P. Le Callet, D. Barba and D. Thoreau, in IEEE Trans. on Pattern Analysis and Machine Intelligence, Vol. 28, N°5, May 2006. Only the video segments having a quality level and/or visibility level greater than or close to a predefined threshold are selected to be inserted in the video album.

In step S5, the video album is generated by aggregating the video segments selected at step S4 in a chronological order. The way to aggregate together the video segments is defined in the selected album template. The transition between two successive video segments is defined in the template. Fading operations can be performed at the beginning and the end of the video segment. A music or sound track defined by the template can be added to the aggregation of video segments.

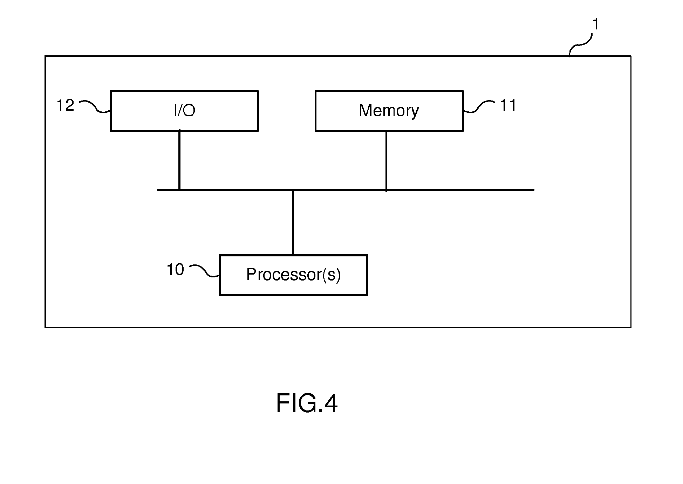

**Figure 4** represents an exemplary architecture of a system 1 configured to generate, from a plurality of video contents, a video album according to any exemplary embodiment of the invention. The system 1 comprises one or more processor(s) 10, which is(are), for example, a CPU, a GPU and/or a DSP (English acronym of Digital Signal Processor), along with internal memory 11 (e.g. RAM, ROM, EPROM). The system 1 comprises one or several Input/Output interface(s) 11 adapted to display output information and/or allow a user to enter commands and/or data (e.g. a keyboard, a mouse, a touchpad, a webcam, a display screen). The system 1 may also comprise network interface(s) (not shown). Of course, the different components of this system are not necessarily included in same equipment. Some steps of the inventive method or parts of them may be implemented by processors of a distant server (cloud server) while the remaining steps are implemented in a local device. In the same manner, the video contents and/or the video segments selected by the inventive method may be stored in memories of a distant server or a local device.

The video contents from which the video album is generated are provided by a source. According to different embodiments of the invention, the source belongs to a set comprising:
- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments of the invention, the generated video album may be sent to a destination. As an example, the reframed video is stored in a remote or in a local memory, e.g. a video memory or a RAM, a hard disk. In a variant, the generated video album is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limitative embodiment of the invention, the system 1 further comprises a computer program stored in the memory 11. The computer program comprises instructions which, when executed by the system 1, in particular by the processor 10, make the system 1 carry out the method described with reference to figure 1. According to a variant, the computer program is stored externally to the system 1 on a non-transitory digital data support, e.g. on an external storage medium such as a HDD, CD-ROM, DVD, a read-only and/or DVD drive and/or a DVD Read/Write drive, all known in the art. The system 1 thus comprises an interface to read the computer program. Further, the system 1 could access one or more Universal Serial Bus (USB)-type storage devices (e.g., "memory sticks.") through corresponding USB ports (not shown).

According to exemplary and non-limitative embodiments, the system 1 is a device, which belongs to a set comprising:
- a mobile device ;
- a communication device ;
- a game device ;
- a tablet (or tablet computer) ;
- a laptop ;
- a still image camera;
- a video camera ;
- an encoding chip;
- a still image server;
- a video server (e.g. a broadcast server, a video-on-demand server or a web server) ;
- a video uploading platform; and
- a display or a decoding chip.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware.

## Claims

1. Method for generating a video album from a plurality of video contents **characterized in that** it comprises the steps of:
- selecting (S2) a target focus for said video album, said target focus being likely to change over a time period;
- detecting (S3), in the plurality of video contents, video segments comprising said target focus;
- selecting (S4), among the detected video segments, video segments according to at least one selection criterion;
- generating (S5) said video album by aggregating said selected video segments in a chronological order.

2. Method according to claim 1, wherein, before selecting the target focus, it comprises a step (S1) of selecting a topic among a plurality of predetermined topics for the video album, an album template being associated to each topic and wherein the selected video segments are aggregated in said video album according to the album template associated to the selected topic.

3. Method according to claim 2 wherein the target focus is selected by:
- selecting video content frames related to the selected topic;
- displaying the selected frames; and
- selecting the target focus by marking an area in at least one of said displayed frames, the marked area including the target focus.

4. Method according to claim 3, wherein the target focus is selected by marking an area in at least two displayed images.

5. Method according to claim 3, wherein the images displayed for the target focus selection have capturing dates spread over said time period and wherein said at least two displayed images and the target focus is selected by marking an area in at least two displayed images having distinct capturing dates.

6. Method according to any one of claims 2 to 5, wherein metadata are associated to at least one video content of said plurality of video contents.

7. Method according to any one of preceding claims, wherein the said at least one selection criterion belongs to the following criteria:
- a quality criterion representative of the visual quality of the video segment;
- a similarity criterion representative of the similarity level between the content of the video segment and the target focus;
- a visibility criterion representative of the size of the target focus in the video segment.

8. System for generating a video album from a plurality of video contents **characterized in that** it comprises one or more processor(s) configured for:
- selecting a target focus for said video album, said target focus being likely to change over a time period;
- detecting, in the plurality of video contents, video segments comprising said target focus;
- selecting, among the detected video segments, video segments according to at least one selection criterion;
- generating said video album by aggregating said selected video segments in a chronological order.

9. Computer program product comprising program code instructions to generate a video album from a plurality of video contents when this program is executed on a computer, **characterized in that** program code instructions are configured for:
- selecting a target focus for said video album, said target focus being likely to change over a time period;
- detecting, in the plurality of video contents, video segments comprising said target focus;
- selecting, among the detected video segments, video segments according to at least one selection criterion;
- generating said video album by aggregating said selected video segments in a chronological order.
